Europäisches Patentamt

**European Patent Office**

**Office européen des brevets**

(11) Veröffentlichungsnummer: **0 255 074**
**B1**

(12) **EUROPÄISCHE PATENTSCHRIFT**

(45) Veröffentlichungstag der Patentschrift:
**06.06.90**

(21) Anmeldenummer: **87110810.6**

(22) Anmeldetag: **25.07.87**

(51) Int. Cl.⁵: **A01D 90/04**

(54) **Ladewagen mit Fördereinrichtung.**

(30) Priorität: **28.07.86 DE 3625515**

(43) Veröffentlichungstag der Anmeldung:
**03.02.88 Patentblatt 88/5**

(45) Bekanntmachung des Hinweises auf die Patenterteilung:
**06.06.90 Patentblatt 90/23**

(84) Benannte Vertragsstaaten:
**AT CH DE LI NL SE**

(56) Entgegenhaltungen:
**CH-A- 425 318**
**GB-A- 2 055 557**
**US-A- 2 471 350**

(73) Patentinhaber: **Alois Pöttinger Maschinenfabrik GmbH,**
**A-4710 Grieskirchen(AT)**

(72) Erfinder: **Menzl, Herbert, Flemingstrasse 14,**
**A-4600 Wels(AT)**

(74) Vertreter: **Dupal, Helmut, Dipl-Ing., Jägerweg 12,**
**A-4702 Wallern(AT)**

## Beschreibung

Die Erfindung betrifft einen Ladewagen mit den Merkmalen des Oberbegriffes des Anspruches 1.

Ladewagen dieser Bauweise sind mit Förderern ausgestattet, die entweder über die Breite durchgehende Reihen von Förderzinken aufweisen, wobei bei leistungsfähigeren Förderern mehrere Reihen von Förderzinken nacheinander den Förderkanal durchlaufen. Die Reihen von Förderzinken sind häufig auch geteilt und zueinander versetzt, so daß sie in Teilen den Förderkanal nacheinander durchlaufen. Schließlich sind auch Förderer bekannt geworden bei denen Förderzinken in Reihen entlang von Kurven, meist Schraubenlinien, aber auch vor- und zurückspringend über einen Förderer verteilt angeordnet sind.

Alle diese Anordnungen mit geteilten oder verteilten Reihen von Förderzinken haben das Ziel die Belastungsspitzen, die erstens beim Einstechen der Förderzinken in das Fördergut und zweitens beim Durchschneiden des Fördergutes an Messern auftreten, besser zu verteilen.

Mit zunehmender Zahl von Messern wird ebenfalls versucht die Messer in zwei und zuweilen auch mehreren Reihen oder nacheinander versetzt anzuordnen, um die Belastungsspitzen, wie sie bei Beginn des Schnittvorganges auftreten, möglichst gleichmäßig zu verteilen. Häufig werden auch beide Maßnahmen kombiniert.

Zur Sicherstellung der Mitnahme des Fördergutes und besonders zum Führen über die Messer eines Schneidwerkes wurden bisher die Förderzinken bis nahe an die Förderkanalrückwand herangeführt, weil man befürchtete, daß das Fördergut unzureichend erfaßt oder liegenbleiben und der Schnittvorgang beeinträchtigt werden könnte. Gewöhnlich beträgt daher der Abstand der Zinken von der Förderkanalrückwand zwischen 10 und 30 mm.

Besonders bei Ladewagen, die für die Ernte von Anwelkgut für die Silage Verwendung finden ist man bestrebt, die Tiefe des Förderkanales geringer zu halten als bei Ladewagen, die für die Ernte von Dürrgut bestimmt sind, weil dadurch auch bei geringeren Fördergutmengen die Schnittqualität erhalten bleibt, diese allgemein besser wird und weil bei Anwendung von Messern mit Schneiden, die einen langen, ziehenden und damit kraftsparenden Schnitt erlauben, dadurch geringere Baulängen und geringeres Gewicht aufweisen, so daß die Messer besser handhabbar, in den Förderkanal einsetzbar und aus dem Förderkanal verschwenkbar und nicht zuletzt auch billiger sind.

Nachteilig ist überdies bei enggestellten Förderzinken, daß aufgesammelte Steine und Erde in den Förderkanal gerecht werden und dann Störungen am Schneidwerk ergeben können.

Aufgabe der Erfindung ist es einen Ladewagen mit den Merkmalen des Anspruches 1 so auszubilden, daß die Belastungsspitzen beim Einstechen und Schnittvorgang herabgesetzt und vergleichmäßigt, die erwähnten Nachteile vermieden werden und den dafür notwendigen technischen Aufwand gering zu halten.

Diese Aufgabe wird durch die Ausbildung eines Ladewagens mit den Merkmalen des Oberbegriffes des Anspruches 1 durch die Anwendung der Merkmale des kennzeichnenden Teiles des Anspruches 1 gelöst.

Die Anwendung dieser Merkmale ergibt eine Vielzahl von Anordnungen der Förderzinken ihrer Länge nach. Je nach Bauweise eines Ladewagens kann damit jene Anordnung gewählt werden, bei der die Belastungsspitzen am geringsten und die Belastungsverteilung am gleichmäßigsten wird und bei der die Förderarbeit bei optimiertem spezifischen Arbeitsaufwand und damit energiesparend erledigt wird.

Besonders vorteilhafte Ausgestaltungen der Erfindung sind in den Unteransprüchen 2 bis 18 beansprucht.

Die größte Verbesserung im Sinne der Aufgabenstellung wird erzielt, wenn die Merkmale des Anspruches 2 angewandt werden.

Die Merkmale des Anspruches 3 sind besonders bei engstehenden Förderzinken vorteilhaft.

Dabei können die an sich bekannten Merkmale der Ansprüche 4 bis 6 sehr vorteilhafte Anordnungen in Kombination mit den Ansprüchen 1 bis 3, bzw. 5 ergeben.

Bei dicht stehenden Doppelzinken ist die Anwendung der Merkmale des Anspruches 7 einfach und vorteilhaft.

Die Länge der langen Förderzinken ist vor allem von der Wirkung her zu bestimmen, die im Anspruch 8 vorgeschrieben ist und kann dabei Maße aufweisen, die in Anspruch 9 angegeben sind.

Für die kurzen Förderzinken sind die günstigen Abmessungen allgemein und im besonderen in den Ansprüchen 10 bis 13 angeführt.

Die Ansprüche 14 und 15 beziehen sich auf besonders vorteilhafte Anordnungen durch Herstellung von Doppelreihen von Förderzinken.

Anspruch 16 bezieht sich auf die vorteilhafte Anwendung von Anordnurgen einfacher Förderzinken und Anspruch 18 auf die vorteilhafte Anwendung von Anordnungen von Doppelzinken als Förderzinken.

Die Erfindung wird nachstehend an Hand einer Zeichnung der wichtigen Anordnung von Förderzinken im einzelnen beschrieben.

Es zeigt

Fig. 1 einen Ausschnitt eines Ladewagens im Querschnitt, schematisch,

Fig. 2 eine Anordnung mit einfachen Förderzinken und ihre Zuordnung zu einem einreihigen Schneidwerk, schematisch,

Fig. 3 eine Anordnung mit einfachen Förderzinken und ihre Zuordnung zu einem zweireihigen Schneidwerk, schematisch,

Fig. 4 eine Anordnung mit Doppelzinken als Förderzinken und ihre Zuordnung zu einem zweireihigen Schneidwerk, schematisch,

Fig. 5 eine Anordnung wie nach Fig.4 mit anderer Zuordnung der beiden Messerreihen des Schneidwerkes, schematisch,

Fig. 6 eine Anordnung wie nach Fig.5 mit enger Stellung der Förderzinken und der Messer, schematisch,

Fig. 7 eine Anordnung mit Einfachzinken in einer anderen Folge von kurzen und langen Förderzinken, schematisch,

Fig. 8 eine Anordnung von Doppelzinken als Förderzinken mit ungleich langen Zinken eines Doppelzinkens, schematisch,

Fig. 9 eine Anordnung von Förderzinken nach einer Schraubenlinie, schematisch,

Fig. 10 eine Anordnung von Doppelzinken mit ungleich langen Zinken eines Doppelzinkens und langen und kurzen Doppelzinken, schematisch,

Fig. 11 eine Anordnung von Förderzinken nach einer anderen Kurve, schematisch und

Fig. 12 eine Anordnung von Förderzinken in einer Doppelreihe in Seitenansicht eines Ausschnittes eines Ladewagens im Schnitt, schematisch.

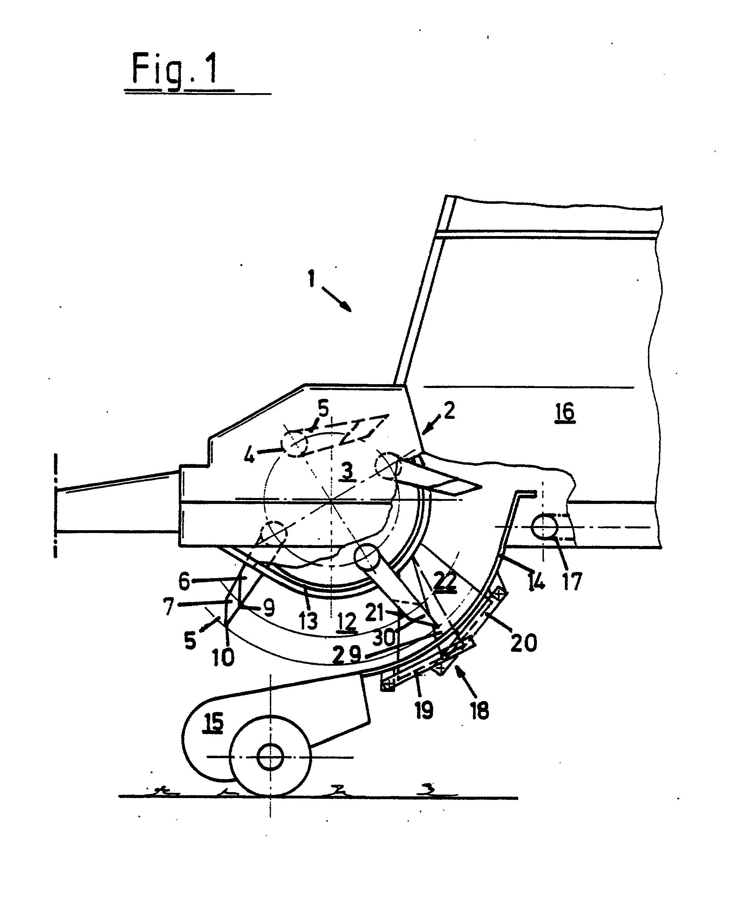

In Fig. 1 ist ein Ladewagen 1 gezeigt, mit einer Fördereinrichtung 2, dessen Förderer 3 mit Förderkämmen 4 ausgestattet ist, die mit in Abstand voneinander angeordneten Förderzinken 5 besetzt sind. Das Fördergut wird von einer Aufsammelvorrichtung 15 aufgenommen, an die Förderzinken 5 übergeben, die das Fördergut durch einen Förderkanal 12, in dem die Messer 21,22 von zwei Reihen 19,20 eines Schneidwerkes 18 angebracht sind, in einen Laderaum 16 befördern, wo es von einem Kratzboden 17 verteilt wird.

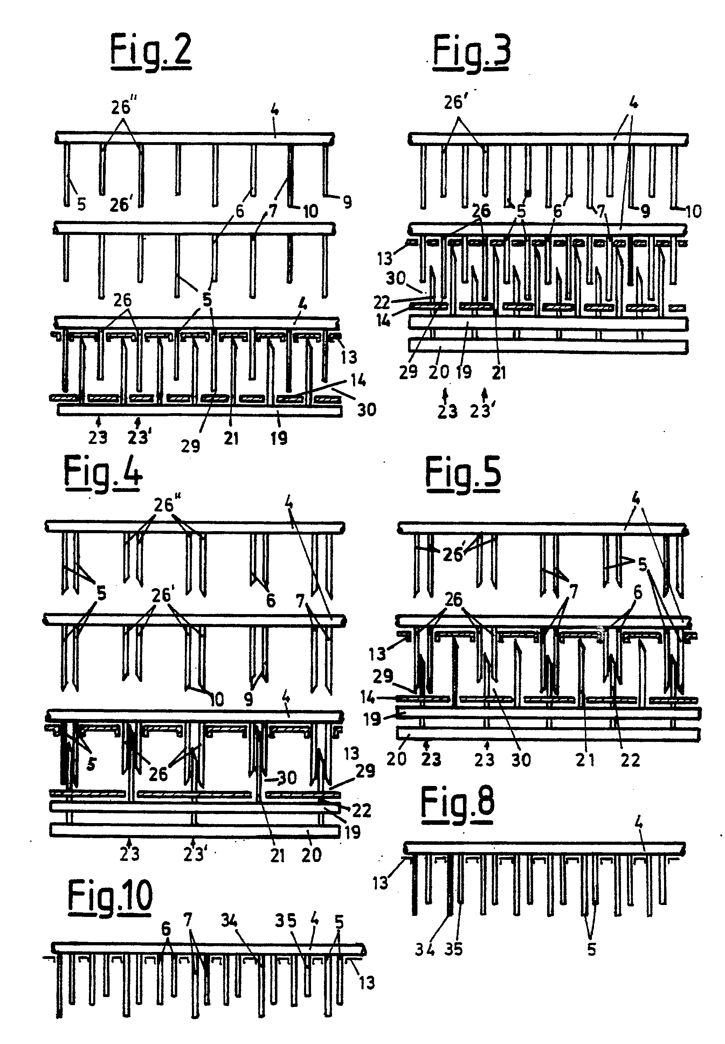

Das Schneidwerk 18 ist mit den zwei Reihen 19,20 von zueinander beabstandeten Messern 21,22 von der Förderkanalrückwand 14 in den Förderkanal 12 eingesetzt, wobei die Messer den Förderkanal 12 vollständig durchqueren und die Messer 21 der ersten Reihe 19 zu den Messern 22 der zweiten Reihe 20 in Richtung der Breite des Förderkanals 12 zueinander versetzt angeordnet sind. Bei einer Anordnung dieser Art stehen die Messer 21 der ersten Reihe 19 gewöhnlich gegen die aus Abstreifern gebildete Förderkanalvorderwand 13, während die Messer 22 der zweiten Reihe 20 zwischen die als Doppelzinken gebildeten Förderzinken 5 greifen (Fig.5).

Es ist aber auch möglich alle Messer 21,22 gegen Abstreifer stehend anzuordnen (Fig.3).

Die Förderzinken 5 jedes Förderkammes 4 bestehen abwechselnd aus langen Förderzinken 7 und kurzen Förderzinken 6.

Bei der Anordnung von einzelnen Förderzinken 5, die zwischen den Abstreifern der Förderkanalvorderwand 13 hindurchgreifend mit einer Reihe 19 von Messern 21 oder zwei Reihen 19,20 von Messern 21,22 zusammenarbeiten sind über die Breite des Förderkanales 12 abwechselnd lange Förderzinken 7 und kurze Förderzinken 6 angeordnet. Dabei sind an einer Stelle 23,23'.. des Förderkanales 12 aufeinanderfolgende Förderzinken 26,26', 26" abwechselnd als lange Förderzinken 7 und als kurze Förderzinken 6 ausgebildet (Fig. 2 und 3).

Bei der Anwendung von Doppelzinken als Förderzinken 5, die ebenfalls zwischen den Abstreifern der Förderkanalvorderwand 13 hindurchragen und mit einer Reihe 19 oder zwei Reihen 19,20 von Messern 21,22 zusammenarbeiten, sind die über die Breite des Förderkanales 12 aufeinanderfolgenden Förderzinken 5 abwechselnd als lange Förderzinken 7 und kurze Förderzinken 6 ausgebildet. Die an einer Stelle 23, 23' .. des Förderkanales 12 aufeinanderfolgenden Förderzinken 26,26',26" sind dabei stets entweder lange Förderzinken 7 oder kurze Förderzinken 6.

Bei zwei Reihen 19,20 von Messern 21,22, die beide zwischen die als Doppelzinken ausgebildeten Förderzinken 5 hineingreifen, sind die kurzen Förderzinken 6 mit den Messern 21 der ersten Reihe 19 zusammenarbeitend angeordnet, so daß die langen Förderzinken 7 mit den Messern 22 der zweiten Reihe 20 des Schneidwerkes 18 zusammenarbeiten und den Förderkanal 12 räumen (Fig.4).

Bei einer Anordnung mit enger gestellten Messern 21,22 in zwei Reihen 19,20 (Fig. 5) werden die Messer 22 der zweiten Reihe 20 von den Doppelzinken der Förderzinken 5 umgriffen, während die Messer 21 der ersten Reihe 19 zwischen benachbarten Doppelzinken eingreifen. Die Doppelzinken sind abwechselnd lange Förderzinken 7 und kurze Förderzinken 6 und die aufeinanderfolgenden Förderzinken 26,26',26" weisen auf einer Stelle 23,23' des Förderkanales 12 stets die gleiche Länge auf.

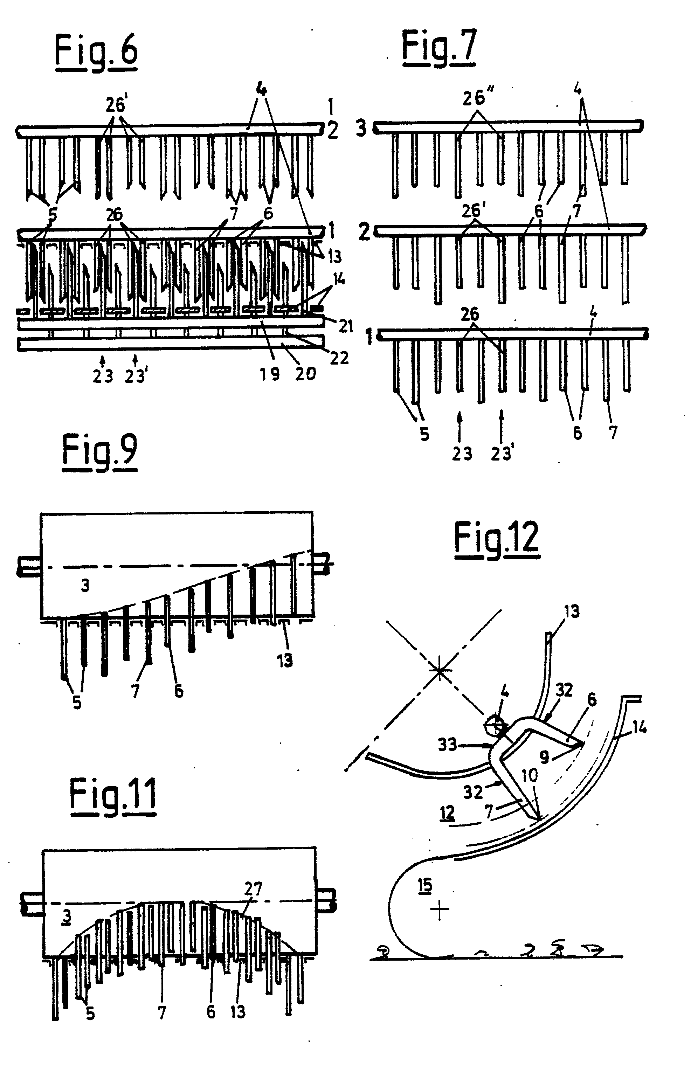

Es ist aber auch eine Anordnung möglich , bei der die aufeinanderfolgenden Förderzinken 26,26',26" an einer Stelle 23,23'.. des Förderkanales 12 abwechselnd lange Förderzinken 7 und kurze Förderzinken 6 sind (Fig.6). Es ist aber auch eine Kombination dieser Abfolge von Förderzinken 26, 26',26" mit der vorherbeschriebenen möglich.

Bei einer Anordnung, bei der der Abstand der Förderzinken 5 in bezug auf die Ausräumung des Förderkanales 12 es gestattet, sind abwechselnd ein langer Förderzinken 7 und zwei kurze Förderzinken 6 über die Breite des Förderkanales 12 angeordnet. Die Anordnung aufeinanderfolgender Förderzinken 26, 26',26" an einer Stelle 23,23'.. des Förderkanales 12 ist in gleicher Weise lange-kurzkurz (Fig. 7).

Bei Förderkämmen 4 mit als Doppelzinken ausgebildeten Förderzinken 5 ist es auch möglich, eine Anordnung zu wählen (Fig.8), bei der ein Zinken 34 lange und der andere Zinken 35 eines Doppelzinkens kurz ausgebildet ist.

Eine weitere mögliche Abstufung ist die Förderzinken 5 als Doppelzinken zusätzlich als lange und kurze Förderzinken 7 und 6 auszubilden (Fig.10).

Bei einer Anordnung von Förderzinken 5 nach einer Schraubenlinie 28 oder nach einer gekrümmten Spur anderer Art 27, wie sie bei Trommelförderern zur Anwendung kommen, kommen die oben beschriebenen Maßnahmen zur Anwendung, indem einzelne Förderzinken 5 abwechselnd lange und kurz ausgebildet werden oder der eine Zinken 34 eines Doppelzinkens lange und der andere Zinken 35 kurz ausgebildet ist (Fig. 10 und 11).

Beim Zusammenfassen zweier im Förderkanal 12 aufeinanderfolgender Reihen 32,32' sind diese in eine Doppelreihe 33 zusammengefaßt am Förderkamm 4 befestigt, wobei die erste Reihe 32 mit kurzen Förderzinken 6 und die zweite Reihe 32' mit langen Förderzinken 7 besetzt ist (Fig.12).

Selbstverständlich können die beschriebenen Anordnungen in geeigneter Weise kombiniert werden. Es ist also möglich, im Förderkanal 12 aufeinanderfolgende Reihen von Förderzinken 26,26',26" abwechselnd mit langen oder kurzen Förderzinken 7 oder 6 auszubilden, oder jede geeignete Aufeinanderfolge von langen und kurzen Förderzinken 7,6 auf unterteilte Förderkämme mit Förderzinken oder Zinkengruppen oder auf zueinander in Bewegungsrichtung 25 des Förderers 3 versetzte Förderzinken und Förderzinkengruppen anzuwenden. Wesentlich ist dabei, daß die Zahl der langen Förderzinken 7 verringert ist und die Förder-und Schnittfunktionen der Anordnung erhalten bleiben.

Bei den in Fig.1 bis 12 beschriebenen Anordnungen ist davon auszugehen, daß die langen Förderzinken 7 einen Abstand 29 zur Förderkanalrückwand 14 aufweisen, der die Mitnahme des Fördergutes ermöglicht und etwa zwischen 15 und 30 mm liegt, wobei 20 bis 25 mm am günstigsten sind.

Weiters ist davon auszugehen, daß die kurzen Förderzinken 7 einen Abstand 30 zur Förderkanalrückwand 14 aufweisen, der zwischen dem Eineinhalbfachen bis zum Achtfachen des Abstandes 29 der langen Förderzinken 7 zur Förderkanalrückwand 14 beträgt und bis zu einem Drittel der Tiefe 31 des Förderkanales 12 erreichen kann. Dem Betrage nach ist ein Abstand 30 von der Förderkanalrückwand 14 zwischen 30 und 80 mm anzuwenden, wobei 25 bis 50 mm am günstigsten sind.

**Patentansprüche**

1. Ladewagen mit einer Fördereinrichtung über deren Breite Förderzinken in einen, von einer Aufsammelvorrichtung in einen Laderaum führenden Förderkanal, bis an dessen Förderkanalrückwand hindurchgreifend, das von der Aufsammelvorrichtung vorgelegte Fördergut aufnehmen, durch den Förderkanal fördern und in den Laderaum abgeben und, vorzugsweise wenigstens durch eine Reihe von Messern einer Schneidvorrichtung führend, die Zerkleinerung des Fördergutes bewerkstelligen, dadurch gekennzeichnet, daß zumindest die über die Breite des Förderkanales (12) aufeinanderfolgenden Förderzinken (5) oder zumindest die den Förderkanal (12) etwa an einer Stelle (23,23'..) aufeinanderfolgend durchlaufenden Förderzinken (26,226'26") wenigstens aus langen Förderzinken (7) und kurzen Förderzinken (6) bestehen.

2. Ladewagen nach Anspruch 1, dadurch gekennzeichnet, daß aufeinanderfolgende Förderzinken (5) abwechselnd zumindest aus langen Förderzinken (7) und kurzen Förderzinken (6) bestehen.

3. Ladewagen nach Anspruch 1, dadurch gekennzeichnet, daß aufeinanderfolgende Förderzinken (5 oder 26,26',26") abwechselnd aus mehr, vorzugsweise zwei, kurzen Förderzinken (6) und weniger, vorzugsweise einem, langen Förderzinken (7) bestehen.

4. Ladewagen nach Anspruch 1 bis 3, dadurch gekennzeichnet, daß über die Breite des Förderkanales (12) aufeinanderfolgende Förderzinken (5) in einer Geraden (24) senkrecht zur Bewegungsrichtung (25) des Förderers (3) angeordnet sind.

5. Ladewagen nach Anspruch 1 bis 3, dadurch gekennzeichnet, daß über die Breite des Förderkanales (12) aufeinanderfolgende Förderzinken (5) entlang einer gekrümmten Spur (27), vorzugsweise einer Schraubenlinie(28), angeordnet sind.

6. Ladewagen nach Anspruch 1 bis 3, dadurch gekennzeichnet, daß die Förderzinken (5) als Doppelzinken ausgebildet sind (Fig.3 bis 5).

7. Ladewagen nach Anspruch 1 bis 6, dadurch gekennzeichnet, daß die als Doppelzinken ausgebildeten Förderzinken (5) wenigstens einen langen Förderzinken (7) und einen kurzen Förderzinken (6) aufweisen, die vorzugsweise abwechselnd angeordnet sind (Fig. 4).

8. Ladewagen nach Anspruch 1 bis 7, dadurch gekennzeichnet, daß die langen Förderzinken (7) in einem Abstand (29) vor der Förderkanalrückwand (14) enden, bei dem zumindest bei einer mittleren Füllung des Förderkanales (12) das Fördergut im wesentlichen gefördert wird.

9. Ladewagen nach Anspruch 1 bis 8, dadurch gekennzeichnet, daß die langen Förderzinken (7) in einem Abstand (29) vor der Förderkanalrückwand (14) enden, der zwischen 10 und 30 mm, vorzugsweise zwischen 20 und 25 mm, beträgt.

10. Ladewagen nach Anspruch 1 bis 9, dadurch gekennzeichnet, daß die kurzen Förderzinken (6) in einem Abstand (30) vor der Förderkanalrückwand (14) enden, der wenigstens dem eineinhalbfachen Abstand (29) der langen Förderzinken (7) von der Förderkanalrückwand (14) entspricht.

11. Ladewagen nach Anspruch 1 bis 10, dadurch gekennzeichnet, daß die kurzen Förderzinken (6) in einem Abstand (30) vor der Förderkanalrückwand (14) enden, der höchstens dem achtfachen Abstand (29) der langen Förderzinken (7) von der Förderkanalrückwand (14) entspricht.

12. Ladewagen nach Anspruch 1 bis 11, dadurch gekennzeichnet, daß die kurzen Förderzinken(6) in einem Abstand (30) vor der Förderkanalrückwand (14) enden, der höchstens einem Drittel der Tiefe (31) des Förderkanales (12) entspricht.

13. Ladewagen nach Anspruch 1 bis 12, dadurch gekennzeichnet, daß die kurzen Förderzinken (6) in einem Abstand (30) vor der Förderkanalrückwand (14), der zwischen 20 und 80 mm, vorzugsweise zwischen 25 und 50 mm beträgt.

14. Ladewagen nach Anspruch 1 bis 13, dadurch gekennzeichnet, daß zwei aufeinanderfolgende, den Förderkanal (12) durchlaufende Reihen (32,32') von Förderzinken (5) zu einer Doppelreihe (33), am Förderer (3) zusammengefaßt, angebracht sind (Fig. 8).

15. Ladewagen nach Anspruch 1 bis 14, dadurch gekennzeichnet, daß die Doppelreihe (33) in der ersten Reihe (32) kurze Förderzinken (6) und in der zweiten Reihe (32') lange Förderzinken (7) aufweist.

16. Ladewagen nach Anspruch 1 bis 15, dadurch gekennzeichnet, daß einfache Förderzinken (5) abwechselnd mit langen Förderzinken (7) und kurzen Förderzinken (6) über die Breite des Förderkanales (12) verteilt angeordnet zwischen Messer (21) einer Reihe (19) eines Schneidwerkes (18) im Förderkanal (12) eingreifen.

17. Ladewagen nach Anspruch 1 bis 16, dadurch gekennzeichnet, daß die als Doppelzinken ausgebildeten Förderzinken (5) wenigstens mit zwei Reihen (19,20) von Messern (21,22) zusammenarbeiten, wobei die Messer (22) der zweiten Reihe (20), die nicht gegen die als Abstreifer ausgebildete Förderkanalvorderwand (13) gerichtet sind, zwischen die Doppelzinken eingreifen, die vorzugsweise als kurze Förderzinken (6) ausgebildet sind.

## Claims

1. Car loader having a conveyor device over whose width conveying prongs feed the conveyed material presented by pick-up apparatus into a conveyor channel, which leads from the pick-up apparatus to a loading area and up to the back wall of which the prongs extend through, convey said material through the conveyor channel and deliver it to the loading area and, preferably leading at least through one row of blades of a cutting device, effect comminution of the conveyed material, characterised in that at least the successive conveying prongs (5) over the width of the conveyor channel (12) or at least the conveying prongs (26, 26', 26″) running successively through the conveyor channel (12) approximately at one point (23, 23'..) at least comprise long conveying prongs (7) and short conveying prongs (6).

2. Car loader according to claim 1, characterised in that successive conveying prongs (5) comprise at least alternate long conveying prongs (7) and short conveying prongs (6).

3. Car loader according to claim 1, characterised in that successive conveying prongs (5 or 26, 26', 26″) alternately comprise several, preferably two, short conveying prongs (6) and a smaller number, preferably one, long conveying prong (7).

4. Car loader according to claims 1 to 3, characterised in that successive conveying prongs (5) over the width of the conveyor channel (12) are disposed in a straight line (24) perpendicular to the direction of movement (25) of the conveyor (3).

5. Car loader according to claims 1 to 3, characterised in that successive conveying prongs (5) over the width of the conveyor channel (12) are disposed along a curved track (27), preferably a helix (28).

6. Car loader according to claims 1 to 3, characterised in that the conveying prongs (5) take the form of double prongs (Figs. 3 to 5).

7. Car loader according to claims 1 to 6, characterised in that the conveying prongs (5) in the form of double prongs have at least one long conveying prong (7) and one short conveying prong (6) which are preferably disposed alternately (Fig.4).

8. Car loader according to claims 1 to 7, characterised in that the long conveying prongs (7) terminate at a distance (29) in front of the conveyor channel back wall (14) at which, at least when the conveyor channel (12) is mid-full, the conveyed material is substantially conveyed.

9. Car loader according to claims 1 to 8, characterised in that the long conveying prongs (7) terminate at a distance (29) in front of the conveyor channel back wall (14) which is between 10 and 30 mm, preferably between 20 and 25 mm.

10. Car loader according to claims 1 to 9, characterised in that the short conveying prongs (6) terminate at a distance (30) in front of the conveyor channel back wall (14) which is at least one and a half times the distance (29) of the long conveying prongs (7) from the conveyor channel back wall (14).

11. Car loader according to claims 1 to 10, characterised in that the short conveying prongs (6) terminate at a distance (30) in front of the conveyor channel back wall (14) which is at most eight times the distance (29) of the long conveying prongs (7) from the conveyor channel back wall (14).

12. Car loader according to claims 1 to 11, characterised in that the short conveying prongs (6) terminate at a distance (30) in front of the conveyor channel back wall (14) which is at most one third of the depth (31) of the conveyor channel (12).

13. Car loader according to claims 1 to 12, characterised in that the short conveying prongs (6) terminate at a distance (30) in front of the conveyor channel back wall (14) which is between 20 and 80 mm, preferably between 25 and 50 mm.

14. Car loader according to claims 1 to 13, characterised in that two successive rows (32, 32') of conveying prongs (5) running through the conveyor channel (12) are mounted, combined to form a double row (33), on the conveyor (3) (Fig.8).

15. Car loader according to claims 1 to 14, characterised in that the double row (33) has short conveying prongs (6) in the first row (32) and long conveying prongs (7) in the second row (32').

16. Car loader according to claims 1 to 15, characterised in that single conveying prongs (5), distributed alternately with long conveying prongs (7) and short conveying prongs (6) over the width of the conveyor channel (12), engage between blades (21) of a row (19) of a cutting mechanism (18) in the conveyor channel (12).

17. Car loader according to claims 1 to 16, characterised in that the conveying prongs (5) in the form of double prongs cooperate with at least two rows (19, 20) of blades (21, 22), the blades (22) of the second row (20), which are not directed towards the conveyor channel front wall (13) constructed as a stripper, engaging between the double prongs which are preferably in the form of short conveying prongs (6).

## Revendications

1. Chariot de chargement muni d'un dispositif de manutention sur la largeur duquel des dents de manutention dans une goulotte de transport menant d'un dispositif de ramassage à une chambre de chargement, s'étendant jusqu'à la paroi arrière de la goulotte, reçoivent le produit à manutentionner présenté par le dispositif de ramassage, l'acheminent par la goulotte et le déposent dans la chambre de chargement et, de préférence, assurent le broyage du produit à manutentionner au moins à l'aide d'une série de lames d'un dispositif de coupe, caractérisé en ce qu'au moins les dents (5) successives sur la largeur de la goulotte (12) ou au moins les dents (26, 26', 26″) successives et traversant la goulotte (12) sensiblement en un endroit (23, 23',...) sont constituées par au moins des dents longues (7) et des dents courtes (6).

2. Chariot de chargement selon la revendication 1, caractérisé en ce que les dents successives (5) consistent de façon alternée au moins en des dents longues (7) et en des dents courtes (6).

3. Chariot de chargement selon la revendication 1, caractérisé en ce que les dents successives (5 ou 26, 26′, 26″) sont constituées alternativement de plusieurs, de préférence de deux dents courtes (6) et de moins de deux, de préférence d'une dent longue (7).

4. Chariot de chargement selon la revendication 1 ou 2, caractérisé en ce que sur la largeur de la goulots (12) les dents successives (5) sont agencées sur une droite (24) perpendiculaire au sens de marche (25) du transporteur (3).

5. Chariot de chargement selon les revendications 1 à 3, caractérisé en ce que sur la largeur de la goulotte (12) sont agencées des dents successives (5) le long d'une voie arquée (27) de préférence d'une ligne hélicoïdale (28).

6. Chariot de chargement selon les revendications 1 à 3, caractérisé en ce que les dents (5) sont constituées par des dents jumelées (fig. 3 à 5).

7. Chariot de chargement selon les revendications 1 à 6, caractérisé en ce que les dents (5) conçues sous forme de dents jumelées présentent au moins une dent longue (7) et une dent courte (6) qui sont agencées de préférence en alternance (fig. 4).

8. Chariot de chargement selon les revendications 1 à 7, caractérisé en ce que les dents longues (7) aboutissent à une certaine distance (29) avant la paroi arrière de la goulotte (14), pour laquelle au moins dans le cas d'un remplissage moyen de la goulotte (12) le produit est sensiblement acheminé.

9. Chariot de chargement selon les revendications 1 à 8, caractérisé en ce que les dents longues (7) aboutissent à une certaine distance (29) avant la paroi arrière de la goulotte (19), qui se situe entre 10 et 30 mm, de préférence entre 10 et 25 mm.

10. Chariot de chargement selon les revendications 1 à 9, caractérisé en ce que les dents courtes (6) se terminent à une certaine distance (30) en amont de la paroi arrière de la goulotte, qui correspond au moins à une fois et demi la distance (29) des grandes dents (7) de la paroi arrière de la goulotte (14).

11. Chariot de chargement selon les revendications 1 à 10, caractérisé en ce que les dents courtes (6) se terminent à une certaine distance (30) en amont de la paroi arrière de la goulotte (14) qui correspond au maximum à huit fois la distance (29) des grandes dents (7) de la paroi arrière de la goulotte (14).

12. Chariot de chargement selon les revendications 1 à 11, caractérisé en ce que les dents courtes (6) se terminent à une certaine distance (30) en amont de la paroi arrière de la goulotte (14), qui correspond au maximum à un tiers de la profondeur (31) de la goulotte (12).

13. Chariot de chargement selon les revendications 1 à 12, caractérisé en ce que les dents courtes (6) se terminent à une certaine distance en amont de la paroi arrière de la goulotte (14), qui se situe entre 20 et 80 mm, de préférence entre 25 et 50 mm.

14. Chariot de chargement selon les revendications 1 à 13, caractérisé en ce que deux séries (32, 32′) de dents (5) successives et traversant la goulotte (12) sont regroupées en une rangée double (33) sur le convoyeur (3) (fig. 8).

15. Chariot de chargement selon les revendications 1 à 14, caractérisé en ce que la double rangée (33) présente dans la première rangée (32) des dents courtes (6) et dans la deuxième rangée (32′) des dents longues (7).

16. Chariot de chargement selon les revendications 1 à 15, caractérisé en ce que les dents (5) sont agencées de façon répartie et en alternance de dents longues (7) et de dents courtes (6) sur la largeur de la goulotte (12) entre la lame (21) d'une rangée (19) d'un outil de coupe (18) dans la goulotte (12).

17. Chariot de chargement selon les revendications 1 à 16, caractérisé en ce que les dents (5) conçues sous forme de dents jumelées coopèrent au moins avec deux rangées (19, 20) de lames (21, 22), les lames (22) de la deuxième rangée (20) qui ne sont pas dirigées vers la paroi avant de goulotte (13) conçues sous forme de râcloir, attaquent entre les dents jumelées qui, de préférence, sont conçues sous forme de dents courtes (6).

EP 0 255 074 B1

# Fig.1

# Fig.2

# Fig.3

# Fig.4

# Fig.5

# Fig.8

# Fig.10

EP 0 255 074 B1

## Fig.6

## Fig.7

## Fig.9

## Fig.12

## Fig.11